# EUROPÄISCHE PATENTANMELDUNG

(11) **EP 4 741 671 A1**
(43) Veröffentlichungstag der Anmeldung: **13.05.2026**
(21) Anmeldenummer: 25210889.9
(22) Anmeldetag: 23.10.2025
(51) Int. Cl.: F16B 5/02, F16B 21/02, F16B 33/00

(54) **AXIALE TOLERANZAUSGLEICHSANORDNUNG, EINE VERBINDUNG ZWISCHEN ZWEI BAUTEILEN DAMIT SOWIE EIN VERBINDUNGS- UND EIN HERSTELLUNGSVERFAHREN DAFÜR**

(30) Priorität: 06.11.2024 DE 102024132374
(71) Anmelder: Böllhoff Verbindungstechnik GmbH, 33649 Bielefeld (DE)
(72) Erfinder: Lindner, Gunnar, 33106 Paderborn (DE); Steffenfauseweh, Sandra, 33415 Verl (DE)
(74) Vertreter: HWP Intellectual Property

(57) **Zusammenfassung**

Die vorliegende Erfindung offenbart eine axiale Toleranzausgleichsanordnung 1 zum selbsttätigen Ausgleich von Toleranzen zwischen einem ersten A und einem zweiten Bauteil B, welche die folgenden Merkmale aufweist: ein Mutternelement 10, vorzugsweise ein ringförmiges Mutternelement, mit einer radial äußeren Befestigungsstruktur, insbesondere einer Bajonettstruktur, die in einer Bauteilöffnung 90, insbesondere einer Schlüssellochgeometrie, des ersten Bauteils A befestigbar ist, und einem inneren Mutterngewinde 22 einer ersten Gangrichtung, eine Hohlschraube 40 mit einem Kopf 44 und einem hohlzylindrischen Schaft 42, der an einer radialen Außenseite ein Verstellgewinde 52 passend zum Mutterngewinde 22 und an einer radialen Innenseite ein Befestigungsgewinde 56 mit einer der ersten entgegengesetzten zweiten Gangrichtung aufweist, welches mit einer Befestigungsschraube 80 zweiter Gangrichtung zusammenwirkt, sodass das erste A und das zweite Bauteil B über die Toleranzausgleichsanordnung 1 aneinander befestigbar sind, wobei der hohlzylindrische Schaft 42 an einem dem kopfabgewandten axialen Ende einen Demontageschutz 60 aufweist, mit dem während einer Installation des Toleranzausgleichsanordnung 1 ein Ausschrauben der Hohlschraube 40 aus dem Mutternelement 10 verhindert ist.

## Beschreibung

### 1. Gebiet der Erfindung

Die vorliegende Erfindung betrifft eine axiale Toleranzausgleichsanordnung zum selbsttätigen Ausgleich von axialen Toleranzen zwischen einem ersten und einem zweiten Bauteil, eine Verbindung zwischen diesen beiden Bauteilen mithilfe der axialen Toleranzausgleichsanordnung, ein entsprechendes Verbindungsverfahren sowie ein Herstellungsverfahren für die axiale Toleranzausgleichsanordnung.

### 2. Hintergrund der Erfindung

Im Stand der Technik sind verschiedene Toleranzausgleichsanordnungen bekannt, mit deren Hilfe zwei Bauteile in einem Abstand zueinander aneinander befestigbar sind. Diese Toleranzausgleichsanordnungen folgen unterschiedlichen technischen Prinzipien.

DE 10 2010 048 239 A1 beschreibt ein erstes Bauteil mit einer hohlzylindrischen Befestigungsausnehmung. In diese Befestigungsausnehmung lässt sich eine Toleranzausgleichshülse einschieben. Nachfolgend wird durch eine Öffnung eines zweiten Bauteils eine Befestigungsschraube in diese Toleranzausgleichshülse eingeschraubt. Mit dem Einschraubevorgang weitet sich die Toleranzausgleichshülse radial auf und verklemmt sich auf diese Art in der Befestigungsausnehmung des ersten Bauteils. Gleichzeitig wird das zweite Bauteil gegen die Toleranzausgleichshülse gezogen, um die Verbindung zwischen dem ersten und dem zweiten Bauteil herzustellen.

Gemäß der technischen Lehre der europäischen Patentanmeldung 0 414 162 A1 wird zunächst in der Öffnung des ersten Bauteils ein Verankerungsteil mit einem Hohlschaft angeordnet. In diesen Hohlschaft wird dann über ein Gewinde ein Distanzstück so weit eingeschraubt, dass es einen vorhandenen Abstand zwischen einem ersten und einem zweiten Bauteil ausgleicht. Durch das Einschrauben der Befestigungsschraube durch die Öffnung des zweiten Bauteils in das Distanzstück wird das Distanzstück dübelartig aufgeweitet. Auf diese Weise erfolgt einerseits das Befestigen des zweiten Bauteils an dem Distanzstück verankert in der Verankerungsanordnung und ein klemmendes radiales Aufweiten des Distanzstücks, um die eingestellte Toleranz zwischen dem ersten den zweiten Bauteil zu fixieren. Diese Konstruktion ist relativ aufwendig, da beispielsweise kein selbsttätiger Toleranzausgleich beim Einschrauben der Befestigungsschraube erfolgt. Vielmehr sind zunächst das Verankerungsstück im ersten Bauteil zu befestigen und nachfolgend durch Schrauben in gleicher Gangrichtung wie der Befestigungsschraube das Distanzstück auf den auszugleichenden Abstand zwischen den Bauteilen einzustellen. Nachfolgend kann es beim Eindrehen in der Befestigungsschraube passieren, dass das Distanzstück weiter in das Verankerungsteil eingedreht wird, wodurch sich wieder die auszugleichende Toleranz der Toleranzausgleichsanordnung verringert. Somit hat diese Anordnung nicht nur von ihrer Anzahl der Teile sondern auch von ihrer Art der Anwendung Nachteile, die die Taktzeit zur Herstellung einer Verbindung zwischen zwei Bauteilen erhöht.

Um einen selbsttätigen axialen Toleranzausgleich zwischen zwei Bauteilen bei deren Verbindung zu realisieren, schlägt der Stand der Technik Toleranzausgleichsanordnungen vor, in denen Gewindepaarungen unterschiedlicher Gangrichtung und ein Mitschlepper miteinander kombiniert werden. Diese sind beispielsweise in EP 2 049 807 B1, DE 10 2020 216 324 A1, EP 1 780 424 A1 beschrieben. Gerade die Integration einer Mitschlepperanordnung in zwei ineinandergreifende Gewindehülsen mit unterschiedlichen Gewindepaarungen erhöht den Herstellungsaufwand derartiger axialer Toleranzausgleichsanordnungen. Denn häufig besteht der Mitschlepper aus einem anderen Material als die miteinander zu verbindenden Gewindehülsen. Nichtsdestotrotz haben diese Anordnungen den Vorteil, dass sie sich ohne zusätzlichen Installationsaufwand in den Verbindungsprozess integrieren lassen, da beim Befestigen der zueinander beabstandeten Bauteile die Toleranzausgleichsanordnung selbsttätig und nachfolgend mechanisch belastbar den Abstand zwischen den beiden Bauteilen stützend ausgleicht.

Das europäische Patent EP 1 304 489 B1 vereinfacht derart bekannte axiale Toleranzausgleichsanordnung mit selbsttätigem Toleranzausgleich weiter. Denn die offenbarte Toleranzausgleichsanordnung besteht lediglich aus einer Schraube, einer Mutter und einer Ausgleichsbuchse. Die Schraube, die Mutter und die Ausgleichsbuchse sind so ausgebildet, dass sie eine rechtsgängige Gewindepaarung und eine linksgängige Gewindepaarung aufweisen. Ferner besitzt die Ausgleichsbuchse einen Klemmabschnitt, der mit der Schraube eine Reibschlussverbindung eingehen kann. Durch diese Maßnahme wird erreicht, dass die Schraube beim Einschraubvorgang zunächst die Ausgleichsbuchse durch Reibschluss mitdreht und hierdurch entgegen der Einsteckrichtung aus der Mutter heraus schraubt, bis sich die Ausgleichsbuchse nach erfolgtem Toleranzausgleich an dem ersten Bauteil anlegt. Nachfolgend wird dann die Schraube unter Überwindung des Reibschlusses direkt oder indirekt mit der Mutter verschraubt. Diese Konstruktion hat somit den Vorteil, dass kein zusätzlicher Mitschlepper, beispielsweise bestehend aus einem weiteren Material, in die Toleranzausgleichsanordnung im Herstellungsprozess integriert werden muss. Vielmehr besteht die Toleranzausgleichsanordnung aus Metall und lässt sich in einem Stück fertigen.

Die oben beschriebenen Toleranzausgleichsanordnungen mit selbsttätiger Toleranzausgleichsfunktion haben jedoch alle den Nachteil, dass bei einem vom Monteur nicht wahrgenommenen zu großen Abstand zwischen den beiden aneinander zu befestigenden Bauteilen die Ausgleichshülse aus dem Befestigungsgewinde herausgeschraubt werden kann. Denn der Befestigungsautomatismus derartiger Toleranzausgleichsanordnungen geht davon aus, dass die auszugleichende Toleranz zwischen den beiden Bauteilen ohne weiteres durch das teleskopartige Auseinanderschrauben der Toleranzausgleichsanordnung realisierbar ist. Ergibt sich jedoch, dass dieser Abstand zu groß für die überbrückbare Distanz der Toleranzausgleichsanordnung ausfällt, werden die beiden Gewindehülsen über ihren Gewindeeingriff hinaus auseinandergeschraubt, sodass die Toleranzausgleichsanordnung ihren Zusammenhalt verliert. Dies zieht zusätzliche Arbeitsschritte nach sich, da neben der weiteren Korrektur des Abstandes zwischen den beiden Bauteilen auch eine neue Toleranzausgleichsanordnung bereitgestellt und die alte Toleranzausgleichsanordnung mit Befestigungsschraube zunächst aus dem ersten Bauteil gelöst werden muss.

Es ist daher die Aufgabe vorliegender Erfindung, bekannte Toleranzausgleichsanordnungen derart anzupassen, dass ein zu großer Abstand zwischen zwei aneinander zu befestigenden Bauteilen nicht zu einem Verlust der dazwischen angeordneten Toleranzausgleichsanordnung führt. Vielmehr soll die Toleranzausgleichsanordnung in der Lage sein, selbst bei einer zu großen zu überbrückenden axialen Toleranz ihre Integrität nicht zu verlieren.

### 3. Zusammenfassung der Erfindung

Die obige Aufgabe wird durch eine Toleranzausgleichsanordnung gemäß dem unabhängigen Patentanspruch 1, durch eine Verbindung zwischen einem ersten und einem zweiten Bauteil mit der Toleranzausgleichsanordnung gemäß dem unabhängigen Patentanspruch 10, durch ein Verbindungsverfahren von zwei Bauteilen mit dieser Toleranzausgleichsanordnung gemäß dem unabhängigen Patentanspruch 12 und durch ein Herstellungsverfahren der oben genannten Toleranzausgleichsanordnung gemäß dem Patentanspruch 13 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Die vorliegende Erfindung offenbart eine axiale Toleranzausgleichsanordnung zum selbsttätigen Ausgleich von Toleranzen zwischen einem ersten und einem zweiten Bauteil, welche die folgenden Merkmale aufweist: ein ringförmiges Mutternelement mit einer radial äußeren Bajonettstruktur, die in einem Schlüsselloch des ersten Bauteils befestigbar ist, und einem inneren Mutterngewinde einer ersten Gangrichtung, eine Hohlschraube mit einem Kopf und einem hohlzylindrischen Schaft, der an einer radialen Außenseite ein Verstellgewinde passend zum Mutterngewinde und an einer radialen Innenseite ein Befestigungsgewinde mit einer der ersten entgegengesetzten zweiten Gangrichtung aufweist, welches mit einer Befestigungsschraube zweiter Gangrichtung zusammenwirkt, sodass das erste und das zweite Bauteil über die Toleranzausgleichsanordnung aneinander befestigbar sind, wobei der hohlzylindrische Schaft an einem dem kopfabgewandten axialen Ende einen Demontageschutz aufweist, mit dem während einer Installation des Toleranzausgleichselements ein Ausschrauben der Hohlschraube aus dem Mutternelement verhindert ist.

Vorliegende Erfindung liefert eine axiale Toleranzausgleichsanordnung, die auf der Grundlage von zwei Gewindepaarungen unterschiedlicher Gangrichtung einen selbsttätigen Toleranzausgleich bei der Installation zwischen zwei voneinander beabstandeten Bauteilen bereitstellt. Um das Herstellen dieser Verbindung zwischen den beiden Bauteilen bereits zu Beginn des Installationsvorgangs zu vereinfachen und damit zu beschleunigen, wird das Mutternelement zur Aufnahme der toleranzausgleichenden Hohlschraube in einer Schlüssellochgeometrie oder Schlüsselloch des ersten Bauteils verankert. Auf diese Weise wird mithilfe des Mutternelements und dem in Kombination damit verwendeten Bajonettverschluss zum ersten Bauteil bzw. Bajonettverbindung zum ersten Bauteil eine belastbare Gewindebasis geschaffen, um das zweite Bauteil in einem bestimmten Abstand daran befestigen zu können. Denn dieser meist nur eine Vierteldrehung beanspruchende Befestigungsvorgang des Mutternelements mit Bajonettstruktur ist einfacher als beispielsweise die Nutzung einer Blindnietmutter oder einer Schweißmutter in Herstellung und Anwendung, um eine Verbindung zwischen zwei Bauteilen herstellen zu können.

Zum Ausgleich des zwischen den beiden Bauteilen existierenden Abstands ist eine Hohlschraube in dem Mutternelement angeordnet, bevorzugt vorinstalliert. Diese Hohlschraube weist in ihrer axialen Erstreckung an einem dem Kopf gegenüberliegenden axialen Ende den oben genannten Demontageschutz auf. Dieser Demontageschutz ist in seiner konstruktiven Funktion dafür ausgelegt, die Gewindepaarung zwischen der Hohlschraube und dem Mutternelement am Ende eines Ausschraubvorgangs der Hohlschraube aus dem Mutternelement derart zu stören, dass dieser Ausschraubvorgang nicht beendet werden kann. Somit stellt der Demontageschutz auf konstruktive Weise sicher, dass die Hohlschraube nicht schraubend aus dem Mutternelement gelöst oder entfernt werden kann. Dieser Demontageschutz bietet somit eine bevorzugte Garantie für den Monteur oder Werker, dass selbst bei einem zu großen Abstand zwischen den beiden Bauteilen ein Versuch des Toleranzausgleichs nicht zu einem Lösen der toleranzausgleichenden Hohlschraube von dem Mutternelement im ersten Bauteil führt. Als Konsequenz führt der Demontageschutz somit zur Vermeidung ungewollter Taktzeitverlängerungen bei der Installation der Verbindung zwischen den beiden Bauteilen, indem ein Zerlegen der Toleranzausgleichsanordnung bestehend aus Mutternelement und Hohlschraube verhindert ist.

Gemäß einer bevorzugten Ausführungsform vorliegender Erfindung bestehen das ringförmige Mutternelement und die Hohlschraube aus Kunststoff und weisen vorzugsweise einen Glasfaseranteil im Bereich von 25% bis 65%, vorzugsweise 45% bis 55% und bevorzugt 50% auf.

Für eine kostengünstige Gestaltung der axialen Toleranzausgleichsanordnung wird diese bevorzugt aus Kunststoff in einem ebenfalls bevorzugten Spritzgussverfahren hergestellt. Bekannte Kunststoffe, beispielsweise thermoplastische Kunststoffe, sind mechanisch ausreichend belastbar, dass sie als Toleranzausgleichsanordnung dienen können. Der Grad der mechanischen Belastung lässt sich zudem noch steigern, indem die thermoplastischen Kunststoffe mit einem Glasfaseranteil versetzt werden. Auf diese Weise können Produktions- und Vertriebskosten gesenkt werden. Denn die Herstellung der Toleranzausgleichsanordnung aus Kunststoff fällt günstiger aus als beispielsweise eine Toleranzausgleichsanordnung aus Metall oder aus einer Kombination aus Kunststoff und Metall. Zudem ist das Gewicht einer Toleranzausgleichsanordnung aus Kunststoff geringer als beispielsweise die gleiche Konstruktion aus Metall. Dies wirkt sich auf spätere Transport- bzw. Lieferkosten aber auch auf das Gewicht der finalen Verbindung der zwei Bauteile unter Verwendung der axialen Toleranzausgleichsanordnung aus.

Vorzugsweise besteht der Demontageschutz der Toleranzausgleichsanordnung aus einer umlaufenden Schaftwand oder mindestens zwei Axialstegen, die sich in axialer Richtung der Hohlschraube erstrecken und die thermisch radial aufweitbar sind, sodass sich mindestens ein freies Ende der Axialstege über einen Innendurchmesser des Mutternelements radial hinaus erstreckt.

Gemäß einer ersten bevorzugten Ausführungsform des Demontageschutzes der Toleranzausgleichsanordnung werden eine umlaufende Schaftwand oder zwei Axialstege der Hohlschraube gegenüberliegend vom Kopf der Hohlschraube thermisch derart aufgeweitet, dass ihre radiale Ausdehnung den Innendurchmesser des Mutternelements übersteigt. Eine thermische Aufweitung erfolgt bevorzugt durch eine Zufuhr von Wärme oder Ultraschall. Auf diese Weise lässt sich die Hohlschraube nicht mehr zerstörungsfrei aus dem Mutternelement ausschrauben. Zudem wird bevorzugt durch die thermisch erzeugte Anordnung der Schaftwand oder der Axialstege des Demontageschutzes erreicht, dass bei einem toleranzausgleichenden Ausschrauben der Hohlmutter aus dem Mutternelement die Hohlmutter im Mutternelement blockiert. Eine derartige Schraubblockade der Hohlschraube ist ein Hinweis an den Werker, den weiteren Installationsvorgang zu unterbrechen und die Notwendigkeit des Toleranzausgleichs zwischen den beiden Bauteilen zu prüfen. Auf diese Weise wird vor dem destruktiven Zerlegen der Toleranzausgleichsanordnung bevorzugt ein Prüfschritt eingefordert, der beispielsweise einen Austausch der Toleranzausgleichsanordnung wegen des Zerlegens in Hohlschraube und Mutternelement vermeidet.

Gemäß einer alternativen Ausgestaltung besteht der Demontageschutz aus mindestens zwei Axialstegen, die sich in axialer Richtung der Hohlschraube erstrecken und sich jeweils mit konstanter oder zunehmender radialer Breite zu einem freien Ende hin erstrecken.

Eine weitere bevorzugte Ausgestaltung vorliegender Erfindung sieht zwei Axialstege als Demontageschutz vor, die sich mit konstanter oder zunehmender radialer Breite zum freien Ende hin erstrecken und nicht thermisch aufgeweitet werden müssen. Die Axialstege weisen eine radiale Ausdehnung auf, die in Kombination mit einer zwischen die Axialstege geschraubten Befestigungsschraube eine radiale Ausdehnung erreichen, die über den Innendurchmesser des Mutternelements hinausgeht. Auf diese Weise wird ebenfalls geometrisch eine Blockade für die Hohlschraube generiert, die ein Ausschrauben der Hohlschraube aus dem Mutternelement vermeidet.

Gemäß einer weiteren bevorzugten Ausführungsform ist es bevorzugt, dass die Stabilität der Axialstege aufgrund ihrer Konfiguration dazu führt, dass das Einschraubmoment der Befestigungsschraube zunimmt, je weiter die Befestigungsschraube zwischen die Axialstege geschraubt worden ist. Dieses zunehmende Drehmoment übersteigt vorzugsweise ein festgelegtes Installationsdrehmoment für die Befestigungsschraube, sodass ein Überschreiten dieses Installationsdrehmoments ebenfalls ein Signal für den Werker ist, dass die Hohlschraube übermäßig weit auf die Befestigungsschraube geschraubt worden ist. Ein derartiges Aufschrauben auf die Befestigungsschraube signalisiert ein ungewolltes Entfernen zwischen Hohlschraube und Mutternelement, welches eventuell zu einem Trennen von Mutternelement und Hohlschraube führen könnte.

Weiter bevorzugt weisen die mindestens zwei Axialstege eine radiale Innen- und eine radiale Außenseite auf, deren Innenseite sich annähernd parallel und deren Außenseite sich parallel oder radial auswärts geneigt zu einer Längsachse der Hohlschraube erstreckt. Im Zusammenhang mit der gerade beschriebenen Toleranzausgleichsanordnung ist es weiter bevorzugt, dass mindestens zwei Axialstege an einer radialen Innenseite kein Gewinde aufweisen, sodass die Befestigungsschraube eine Drehhemmung durch die Axialstege erfährt und/oder diese stärker radial auswärts versetzt als mit Gewinde.

In weiterer bevorzugter Ausgestaltung der oben beschriebenen Ausführungsform weisen die thermisch nicht verformten Axialstege an ihrer radialen Innenseite bevorzugt kein Gewinde auf. Das Fehlen eines Gewindes hat vorzugsweise den Effekt, dass eine eingeschraubte Befestigungsschraube diese Axialstege weiter radial nach außen versetzt. Denn die Gewindestege der Befestigungsschraube können nicht in dafür vorgesehene Gewindefurchen eines Innengewinde der Axialstege eingreifen und drücken somit die Axialstege weiter radial nach außen. Dies unterstützt die radiale Ausdehnung der Axialstege, sodass diese einen Innendurchmesser des Mutternelements überschreiten.

Gemäß einer weiteren bevorzugten Ausgestaltung führt das Fehlen eines Gewindes an der radialen Innenseite der Axialstege dazu, dass beim Eindrehen der Befestigungsschraube eine Steigerung des Eindrehmoment der Befestigungsschraube erzielt wird. Dieses Eindrehmoment übersteigt vorzugsweise einen vorbestimmten Grenzwert, sodass dieses Eindrehmoment einen möglichen Defekt in der Anordnung der beiden Bauteilen in Kombination mit der Toleranzausgleichsanordnung signalisiert. Somit kann bevorzugt der Werker seinen Installationsvorgang unterbrechen und die herzustellende Verbindungskonfiguration überprüfen.

Gemäß einer weiteren bevorzugten Ausführungsform der Toleranzausgleichsanordnung besteht der Demontageschutz aus mindestens zwei Axialstegen, die sich in axialer Richtung der Hohlschraube erstrecken und an denen jeweils an einer radialen Außenseite radial auswärts ein, vorzugsweise umfänglich verlaufender, Radialsteg angeordnet ist.

Gemäß einer weiteren bevorzugten Ausführungsform der axialen Toleranzausgleichsanordnung sind als Demontageschutz mindestens zwei Axialstege vorgesehen, die an ihrer radialen Außenseite einen radial auswärts vorstehenden Radialstege aufweisen. Dieser vorstehende Radialsteg, vorzugsweise zwei einander gegenüberliegende vorstehende Radialstege auf zwei sich gegenüberliegend angeordneten Axialstegen, weisen allein genommen oder gemeinsam eine radiale Ausdehnung auf, die über den Innendurchmesser des Mutternelements hinausgeht. Sofern eine Befestigungsschraube zwischen die Axialstege geschraubt worden ist, haben diese Axialstege eine ausreichende radiale Stabilität, sodass sie beispielsweise durch das Mutternelement nicht radial einwärts gedrückt werden können. Basierend auf dieser Konstruktion behalten somit die radial auswärts ragenden Radialstege ihre Position bei, die der Hohlschraube eine radiale Ausdehnung über den Innendurchmesser des Mutternelements hinaus verleiht. Damit blockieren die radial auswärts ragenden Radialstege ein Ausschrauben der Hohlschraube aus dem Mutternelement.

Weiter bevorzugt realisieren die radial auswärts ragenden Radialstege auch eine Verliersicherung der Hohlschraube in dem Mutternelement. Denn für einen bevorzugten Transport wird die Hohlschraube in das Mutternelement eingeschraubt und dann zum Kunden transportiert. Sollten Vibrationen dazu führen, dass sich die Hohlschraube aus dem Mutternelement zu lösen versucht, dann verhindern die radial auswärts ragenden Radialstege ein finales Ausschrauben oder einen finalen Auszug aus dem Innengewinde des Mutternelements, selbst wenn sich keine Befestigungsschraube zwischen den beiden Axialstegen befindet. Denn die radial auswärts gerichtete Federkraft der Axialstege ist ausreichend groß, dass allein durch Vibrationen die radial auswärts gerichteten Radialstege nicht nach innen gedrückt werden können, um die Hohlschraube aus Mutternelement lösen zu können.

Vorzugsweise sind die mindestens zwei Radialstege derart in Bezug zueinander angeordnet sind, dass sie einen umfänglich verlaufenden Gewindesteg bilden.

Gemäß einer weiteren bevorzugten Ausgestaltung der oben beschriebenen radial auswärts ragenden Radialstege auf den Axialstegen der Hohlschraube sind diese Radialstege in Bezug zueinander derart angeordnet, dass sie einen gemeinsamen Gewindesteg bilden. Dieser Gewindestege ist zwar unterbrochen und wird nur durch die Radialstege bzw. Radialsegmente auf den Axialstegen gebildet, doch erstreckt er sich vorzugsweise schraubenförmig auf den radialen Außenseiten der Axialstege und weiter bevorzugt in Fortsetzung des Außengewindes der Hohlschraube. Auf diese Weise leisten die radial auswärts ragenden Radialstege neben der Verlierersicherung und der Demontagesicherung zusätzlich bevorzugt auch noch eine Installationsunterstützung der Hohlschraube in dem Mutternelement. Denn der segmentierte Gewindegang an der radialen Außenseite der Axialstege dient dazu, ein Einschrauben der Hohlschraube in das Mutternelement zu erleichtern, um einen vorinstallierten Zustand der Toleranzausgleichsanordnung bereitstellen zu können.

Gemäß einer weiteren bevorzugten Ausgestaltung vorliegender Erfindung weist die Hohlschraube der Toleranzausgleichsanordnung als Befestigungsgewinde einen metallischen Gewindeeinsatz eingeformt in den hohlzylindrischen Schaft auf.

Gemäß einer weiteren bevorzugten Ausgestaltung vorliegender Erfindung wird das Innengewinde der Hohlschraube mithilfe eines metallischen Gewindeeinsatzes verstärkt. Der metallische Gewindeeinsatz bildet die Grundlage dafür, höhere Kräfte zwischen der Befestigungsschraube und der Hohlschraube übertragen zu können. So ist es beispielsweise bevorzugt, eine metallische Befestigungsschraube in Kombination mit dem metallischen Gewindeeinsatz zu nutzen, um die Befestigungskräfte zum Halt der beiden Bauteile aneinander über die Toleranzausgleichsanordnung zu erhöhen. In diesem Zusammenhang leitet der metallische Gewindeeinsatz eingebettet in die radiale Innenseite der Hohlschraube auftretende Schraubkräfte zwischen der Befestigungsschraube und dem Gewindeeinsatz in das umgebende Kunststoffmaterial ab.

Vorliegende Erfindung offenbart zudem eine Verbindung eines ersten Bauteils und eines dazu beabstandeten zweiten Bauteils mit der Toleranzausgleichsanordnung gemäß mindestens einer der oben beschriebenen Ausgestaltungen und einer Befestigungsschraube.

Gemäß einer weiteren bevorzugten Ausgestaltung der Verbindung weist das erste Bauteil eine Schlüssellochgeometrie auf, in der das Mutternelement angeordnet ist.

Vorliegende Erfindung offenbart zudem ein Verbindungsverfahren eines ersten Bauteils mit einer Schlüssellochgeometrie mit einem dazu beabstandeten zweiten Bauteil mit einer Bauteilöffnung mit einer Toleranzausgleichsanordnung gemäß einer der oben beschriebenen Ausgestaltungen oder einer Kombination davon, das die folgenden Schritte aufweist: Befestigen des ringförmigen Mutternelement mit der darin vormontierten Hohlschraube in der Schlüssellochgeometrie des ersten Bauteils, Anordnen der Bauteilöffnung des zweiten Bauteils gegenüber dem Befestigungsgewinde der Hohlschraube und Einschraubens einer Befestigungsschraube, die sich durch die Bauteilöffnung erstreckt, in das Befestigungsgewinde, Drehen der Befestigungsschraube und dadurch Mitdrehen der Hohlschraube, bis diese an dem zweiten Bauteil anliegt und Festziehen der Befestigungsschraube im Befestigungsgewinde, wenn sich der Kopf der Hohlschraube am zweiten Bauteil abstützt.

Zudem umfasst vorliegende Erfindung ein Herstellungsverfahren der Toleranzausgleichsanordnung gemäß einer der obigen Ausgestaltungen, das die folgenden Schritte aufweist: Bereitstellen einer Spritzgussform für das Mutternelement und für die Hohlschraube, Spritzgießen des Mutternelements und der Hohlschraube, Entformen des Mutternelements und der Hohlschraube, Vorinstallieren der Hohlschraube in dem Mutternelement.

### 4. Kurzzusammenfassung der Zeichnungen

Die bevorzugten Ausführungsformen vorliegender Erfindung werden unter Bezugnahme auf die begleitenden Zeichnungen näher erläutert. Es zeigen:
- Figur 1: eine Explosionsdarstellung einer bevorzugten Ausgestaltung der Hohlschraube und des Mutternelements der axialen Toleranzausgleichsanordnung,
- Figur 2: die bevorzugte Hohlschraube und das Mutternelement gemäß Figur 1 in einem vorinstallierten Zustand,
- Figur 3: eine bevorzugte Ausführungsform einer Schlüssellochgeometrie zur Aufnahme und Befestigung des Mutternelements,
- Figur 4: eine axiale Schnittdarstellung einer bevorzugten Ausführungsform einer Hohlschraube in Kombination mit dem Mutternelement in einem vorinstallierten Zustand,
- Figur 5: eine Schnittdarstellung der bevorzugten Kombination aus Mutternelement und Hohlschraube mit einem Werkzeug zur thermischen Aufweitung des bevorzugten Demontageschutzes,
- Figur 6: eine Kombination aus bevorzugter Hohlschraube und Mutternelement mit einem thermisch aufgeweiteten Demontageschutz an einem axialen Ende der Hohlschraube,
- Figur 7: eine Schnittdarstellung von zwei miteinander zu verbindenden Bauteilen mithilfe der bevorzugten axialen Toleranzausgleichsanordnung und einer Befestigungsschraube,
- Figur 8: eine Schnittdarstellung einer Verbindung aus zwei Bauteilen mit Hilfe der bevorzugten axialen Toleranzausgleichsanordnung und einer Befestigungsschraube,
- Figur 9: eine weitere bevorzugte Ausführungsform einer Hohlschraube in Kombination mit einem Mutternelement in einer Explosionsdarstellung,
- Figur 10: die bevorzugte Ausgestaltung der Hohlschraube und des Mutternelements gemäß Figur 9 in einem vorinstallierten Zustand,
- Figur 11: zwei zueinander beabstandete Bauteile im Prozess des Verbindens mit der bevorzugten axialen Toleranzausgleichsanordnung mithilfe einer Befestigungsschraube,
- Figur 12: zwei zueinander beabstandete Bauteile, die mit der bevorzugten axialen Toleranzausgleichsanordnung und einer Befestigungsschraube miteinander verbunden sind,
- Figur 13: eine weitere bevorzugte Ausführungsform der Hohlschraube und des Mutternelements in einer Explosionsdarstellung,
- Figur 14: die Hohlschraube und das Mutternelement aus Figur 13 in einem vorinstallierten Zustand,
- Figur 15: zwei zueinander beabstandete Bauteile, die mit der bevorzugten axialen Toleranzausgleichsanordnung und einer Befestigungsschraube miteinander verbunden werden,
- Figur 16: zwei zueinander beabstandete Bauteile, die mit der erfindungsgemäß bevorzugten Toleranzausgleichsanordnung und einer Befestigungsschraube miteinander verbunden sind,
- Figur 17: eine Kombination aus einer weiteren bevorzugten Ausführungsform der Hohlschraube und des Mutternelements in einem vorinstallierten Zustand,
- Figur 18: eine vergrößerte perspektivische Ansicht einer weiteren bevorzugten Ausgestaltung der Hohlschraube,
- Figur 19: eine bevorzugte Ausführungsform des Mutternelements in einer perspektivischen Ansicht,
- Figur 20: zwei Bauteile in einem Abstand zueinander, die mit der axialen Toleranzausgleichsanordnung gemäß einer bevorzugten Ausgestaltung vorliegender Erfindung und einer Befestigungsschrauben miteinander verbunden werden,
- Figur 21: zwei Bauteile, die mit Hilfe der bevorzugten axialen Toleranzausgleichsanordnung und einer Befestigungsschraube im Abstand zueinander miteinander verbunden sind,

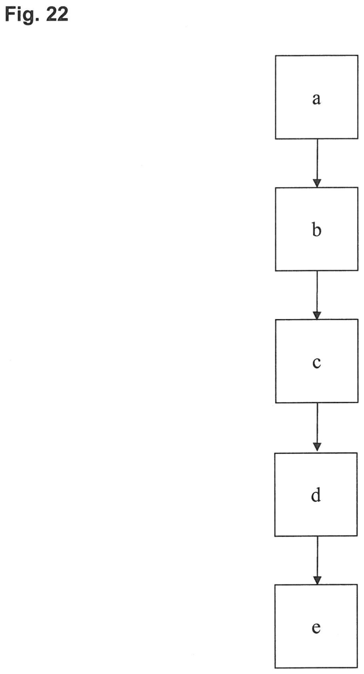

- Figur 22: ein Flussdiagramm einer bevorzugten Ausführungsform eines Verbindungsverfahrens unter Verwendung der axialen Toleranzausgleichsanordnung,

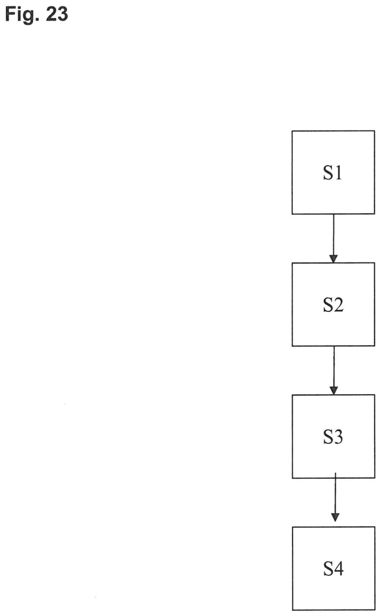

- Figur 23: ein Flussdiagrammen einer bevorzugten Ausführungsform eines Herstellungsverfahrens der erfindungsgemäßen axialen Toleranzausgleichsanordnung.

### 5. Detaillierte Beschreibung der bevorzugten Ausführungsformen

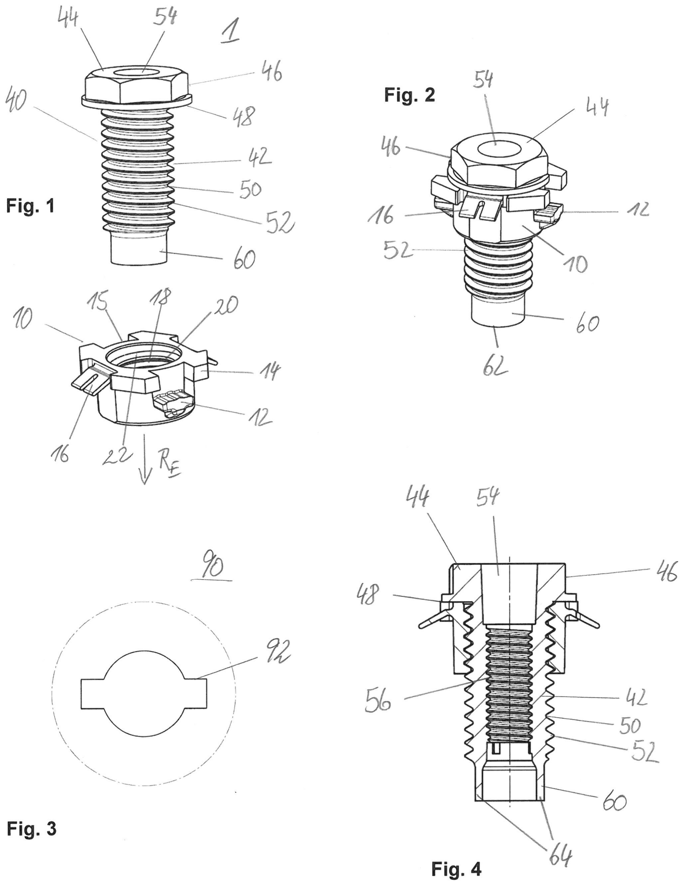

Figur 1 zeigt eine Explosionsdarstellung einer bevorzugten Ausführungsform der axialen Toleranzausgleichsanordnung 1 bestehend aus einem Mutternelement 10 und einer Hohlschraube 40.

Vorzugsweise ist das Mutternelement 10 ringförmig ausgebildet, um es in einer passenden Bauteilöffnung O1 eines ersten Bauteils A befestigen zu können. Gemäß der gezeigten bevorzugten Ausgestaltung in Figur 1 hat das Mutternelement 10 eine unten näher erläuterte Bajonettstruktur, mit der sie in einer Schlüssellochgeometrie 90 des Bauteils A befestigbar ist. Die Schlüssellochgeometrie 90 hat dazu in bekannter Weise mindestens zwei Ausschnitte 92, die umfänglich gleichmäßig verteilt angeordnet sind. Die Ausschnitte 92 sind derart an das Mutternelement 10 angepasst, dass zwei sich radial vom Mutternelement 10 nach außen erstreckende Bajonettstege 12 durch die Ausschnitte 92 durchgesteckt werden können, um dann durch Drehen das Mutternelement 10 am ersten Bauteil A verriegeln zu können. Im befestigten Zustand wird das erste Bauteil A zwischen den Bajonettstegen 12 und einer Unterseite eines axial zu den Bajonettstegen 12 beabstandeten Haltekragens 14 des Mutternelements 10 reibschlüssig gehalten.

Vorzugsweise um 90° versetzt zu den zwei Bajonettstegen 12 ist mindestens ein Raststeg 16, vorzugsweise zwei Raststege bei zwei Bajonettstegen 12, angeordnet. Die Raststege 16 sind vorzugsweise in Einsetzrichtung R_{E} des Mutternelements 10 geneigt angeordnet. Wird das Mutternelement 10 in die Schlüssellochgeometrie 90 eingesteckt, durchgreifen die Bajonettstege 12 die Ausschnitte 92. Gleichzeitig stützen sich die Raststege 16 an der Oberfläche des ersten Bauteils A zwischen den Ausschnitten 92 ab und erzeugen eine bevorzugte Federvorspannung auf das Mutternelement 10 entgegen der Einsetzrichtung R_{E}.

Sobald das Mutternelement 10 um seine Längsachse gedreht worden ist, verriegeln sich die Bajonettstege 12 an einer dem Haltekragen 14 abgewandten Seite des ersten Bauteils A. Während die Bajonettstege 12 zum Befestigen des Mutternelements 10 im Schlüsselloch 90 aus den Ausschnitten 92 heraus gedreht werden, werden die Raststege 16 bevorzugt in die Ausschnitte 92 hinein gedreht. Aufgrund der bevorzugten geneigten Anordnung der Raststege 16 rasten diese in die Ausschnitte 92 ein und verhindern dadurch ein zukünftiges Drehen des Mutternelements 10 um seine Längsachse.

Zum Drehen des Mutternelements 10 ist der Haltekragen 14 an mindestens zwei Stellen 15 bevorzugt durchbrochen, um einen Eingriff für ein drehendes Werkzeug bereitzustellen.

Vorzugsweise ist das Mutternelement 10 in Kombination mit den Bajonett- 12 und Raststegen 16 ringförmig ausgebildet.

Gemäß einer weiteren bevorzugten Ausführungsform des Mutternelements 10 (nicht gezeigt) weist es an einer radialen Außenseite anstelle der Bajonett- 12 und Raststege 16 ein Außengewinde auf, um in einer Gewindeöffnung des ersten Bauteils A befestigt werden zu können.

Damit wird das ringförmige Mutternelement 10 so weit in eine Gewindeöffnung des ersten Bauteils A eingeschraubt, bis sich der Haltekragen 14 an der Bauteiloberfläche des ersten Bauteils A abstützt. Somit bildet das Außengewinde in Kombination mit dem Haltekragen 14 eine reibschlüssige Verdrehsicherung. Diese Verdrehsicherung wird in der Ausführungsform von Figur 1 durch die Kombination von Bajonett- 12 und Raststegen 16 als formschlüssige Verdrehsicherung bereitgestellt.

Gemäß einer weiteren nicht gezeigten bevorzugten Ausführungsform des Mutternelements 10 ist dieses in Umfangsrichtung dreieckig oder polygonal geformt, um in eine Bauteilöffnung im ersten Bauteil A komplementärer Form eingesetzt zu werden. Die eckige Form des Mutternelements 10 sorgt innerhalb der Bauteilöffnung O1 für eine Verdrehsicherung des Mutternelements 10 relativ zum ersten Bauteil A.

Um das eckige Mutternelement 10 in der Bauteilöffnung O1 zu halten, ist in Richtung der axialen Einsetzrichtung R_{E} unterhalb des Haltekragens 14 eine Raststruktur (nicht gezeigt) vorgesehen. Die bevorzugte Raststruktur verrastet das Mutternelement 10 bevorzugt reibschlüssig und formschlüssig in der Bauteilöffnung O1.

Das Mutternelement 10 weist einen Durchgangskanal 18 auf, an dessen radialer Innenseite 20 ein Innengewinde 22 einer ersten Gangrichtung angeordnet ist.

Eine Hohlschraube 40 hat einen hohlzylindrischen Schaft 42 mit einem ersten und einem zweiten axialen Ende. Am ersten axialen Ende des Schafts 42 ist ein Kopf 44 mit einem Antriebsmerkmal 46, insbesondere ein Sechskant, und einer schaftzugewandten Anlagefläche 48 vorgesehen.

Der hohlzylindrische Schaft 42 weist eine radiale Außenseite 50 mit einem Verstellgewinde 52 auf. Das Verstellgewinde 52 passt mit dem Innengewinde 22 des Mutternelements 10 zusammen und ist somit ein Verstellgewinde 52 erster Gangrichtung.

Der hohlzylindrische Schaft 42 hat einen beidseitig offenen inneren Kanal 54, der im axialen Schnittbild der Figur 4 zu erkennen ist. An einer radialen Innenseite des Kanals 54 ist ein Befestigungsgewinde 56 einer der ersten Gangrichtung entgegengesetzten zweiten Gangrichtung angeordnet.

An dem zweiten axialen Ende der Hohlschraube 40, welches dem Kopf 44 gegenüberliegt, ist ein Demontageschutz 60 der Hohlschraube 40 angeordnet. Der Demontageschutz 60 in den unterschiedlichen bevorzugten Ausführungsformen vorliegender Erfindung hat die Funktion, ein ausschraubendes Lösen der Hohlschraube 40 aus dem Mutternelement 10 zu vermeiden. Ein derartiges ausschraubendes Lösen oder allgemein ein Lösen kann beispielsweise beim Transport der im Mutternelement 10 vorinstallierten Hohlschraube 40 durch Vibrationen auftreten.

Häufiger tritt die Situation während des Verbindens von zwei Bauteilen A, B und einem zu großen Abstand T zwischen den beiden Bauteil A, B auf. Übersteigt der Abstand T zwischen den beiden Bauteilen A, B eine maximal mögliche Längenänderung der Toleranzausgleichsanordnung 1, würde der selbsttätige Toleranzausgleich die Hohlschraube 40 ohne Unterbrechung aus dem inneren Mutterngewinde 22 des Mutternelements 10 heraus schrauben und lösen.

Dieses ungewollte Lösen erfordert zusätzlichen Reparaturaufwand des Werkers, weil die Hohlschraube 40 wieder mit dem Mutternelement 10 verbunden und die Bauteile A, B neu angeordnet werden müssen.

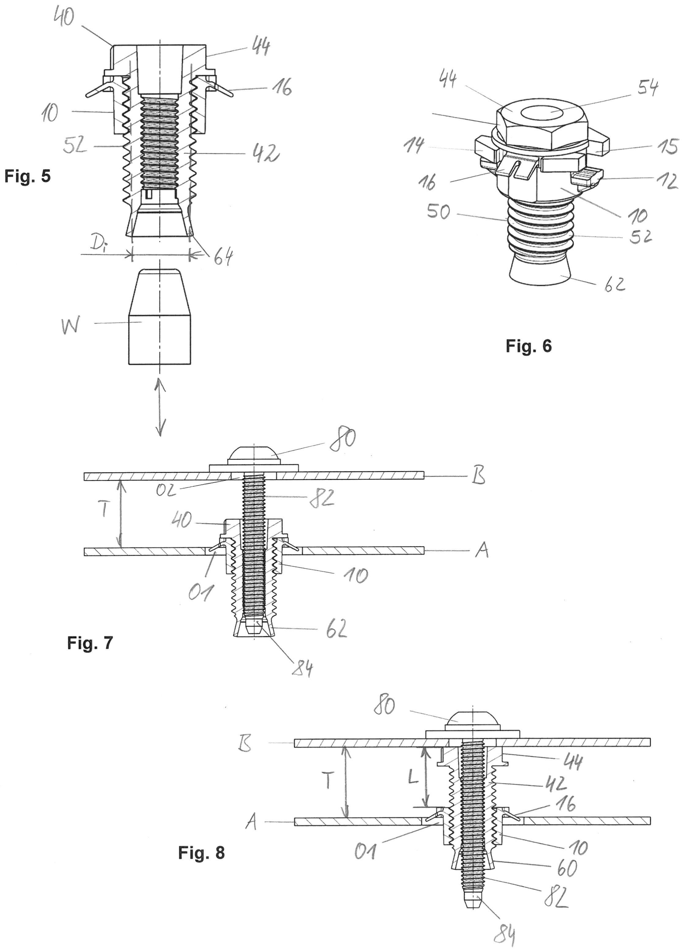

In der in den Figuren 2 und 4 gezeigten bevorzugten Ausführungsform vorliegender Erfindung besteht der Demontageschutz 60 aus einer umlaufenden Schaftwand 62 ohne Gewinde oder aus mindestens zwei Axialstegen 64, die sich in axialer Richtung der Hohlschraube 40 erstrecken. Um ein Lösen der Hohlschraube 40 aus dem Mutternelement 10 zu vermeiden, wird die umlaufende Schaftwand 62 oder die Mehrzahl von Axialstegen 64 mithilfe des bevorzugten konisch geformten Werkzeugs W thermisch radial aufgeweitet, vorzugsweise mittels Ultraschall. Die radiale Aufweitung erfolgt vorzugsweise auf ein radiales Maß, an dem sie einen Innendurchmesser D_{I} des Mutternelements 10 überschreitet (siehe Figur 5).

Die Hohlschraube 40 wird durch die Drehung der Befestigungsschraube 80 so weit aus dem Mutternelement 10 herausgeschraubt, dass der Demontageschutz 60, hier die aufgeweitete Schaftwand 62 oder die thermisch aufgeweiteten Axialstege 64, das kopfabgewandte Ende des Mutternelements 10 erreicht. In diesem Zustand blockiert der Demontageschutz 60 durch seine radiale Ausdehnung ein weiteres Ausschrauben der Hohlschraube 40 aus dem Mutternelement 10. Denn der aufgeweitete Demontageschutz 60 hat einen Außendurchmesser, der größer ist als der Innendurchmesser des Mutternelements 10.

Die Figuren 7 und 8 illustrieren das Verbinden des ersten A und des zweiten Bauteils B bei gleichzeitigem Ausgleich axialer Toleranzen zwischen den Bauteilen A, B mithilfe der Toleranzausgleichsanordnung 1. In einem ersten bevorzugten Schritt A wird das Mutternelement 10 mit der darin vorinstallierten Hohlschraube 40 in der Schlüssellochgeometrie 90 des ersten Bauteils A befestigt.

Nachfolgend wird das zweite Bauteil B mit einer Bauteilöffnung O2 so angeordnet, dass die Bauteilöffnung O2 auf den Kanal 54 der Hohlschraube 40 im Mutternelement 10 ausgerichtet ist. Ausgerichtet bedeutet in diesem Zusammenhang bevorzugt, dass ein Mittelpunkt der Bauteilöffnung O2 auf der Mittellängsachse des Kanals 54 liegt oder benachbart dazu.

Dann wird die Befestigungsschraube 80 durch die Bauteilöffnung O2 des zweiten Bauteils B in den Kanal 54 der Hohlschraube 40 gesteckt und in der zweiten Gangrichtung gedreht. Denn das Schraubengewinde 82 der Befestigungsschraube 80 weist die gleiche Gangrichtung wie das Befestigungsgewinde 56 innerhalb der Hohlschraube 40 auf.

Da das Befestigungsgewinde 56 und das Schraubengewinde 82 geometrisch zueinander passen, lässt sich die Befestigungsschraube 80 so weit in das Befestigungsgewinde 56 einschrauben, bis das kopfabgewandte Ende des Schraubenschafts 84 einen gewindelosen Mitnehmerbereich 58 erreicht, der einen Reibwiderstand zwischen der drehenden Befestigungsschraube 80 und der Hohlschraube 40 im Vergleich zum Gewindeeingriff zwischen Schraubengewinde 82 und Befestigungsgewinde 56 erhöht (Schritt B).

Basierend auf der zunehmenden Reibung zwischen der Befestigungsschraube 80 und der Hohlschraube 40 wird die Hohlschraube 40 durch die Befestigungsschraube 80 mitgedreht. Da die Befestigungsschraube 80 in der zweiten Gangrichtung die Hohlschraube 40 mitdreht, die Hohlschraube 40 aber mit dem Verstellgewinde 52 in dem Innengewinde 22 der ersten Gangrichtung geführt wird, schraubt die Drehung der Befestigungsschraube 80 die Hohlschraube 40 in Richtung zweites Bauteil B aus dem Mutternelement 10 (Schritt C).

Sobald der Kopf 44 der Hohlschraube 40 am zweiten Bauteil B anliegt, überwindet die Drehung der Befestigungsschraube 80 den Mitnehmerbereich 56 und verschraubt sich fest mit der Hohlschraube 40.

Sollte ein Abstand T zwischen den Bauteilen A, B größer sein als eine maximal mit der Toleranzausgleichsanordnung 1 einstellbaren und damit überbrückbaren Länge L, dann könnte das Drehen der Befestigungsschraube 80 die Hohlschraube 40 aus dem Mutternelement 10 lösen.

Dieses Lösen wird aber durch den Demontageschutz 60 verhindert. Denn aufgrund der radialen Ausdehnung des Demontageschutzes 60 lässt sich die Hohlschraube 40 nicht in das/aus dem Mutternelement 10 hinein/heraus schrauben.

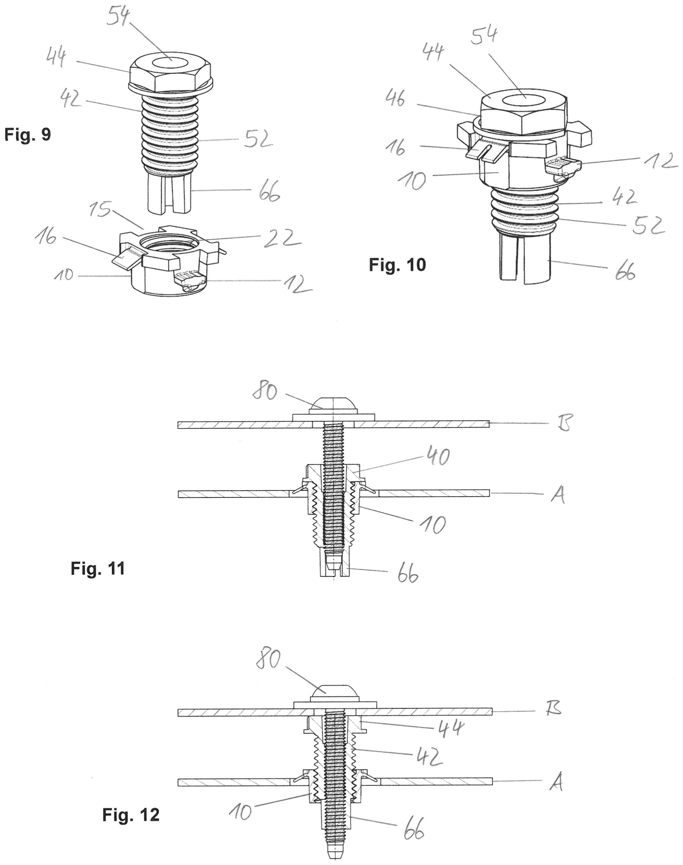

Zwei weitere bevorzugte Ausführungsformen des Demontageschutzes 60' 60" der Hohlschraube 40 zeigen die Figuren 9-12 und 13-16. Die Konstruktion des Mutternelements 10 und der Hohlschraube 40 abgesehen von dem Demontageschutz 60 entspricht den oben beschriebenen Ausgestaltungen unter Bezugnahme auf die Figuren 1-8.

Der Demontageschutz 60' der Figuren 9-12 weist mindestens zwei Axialstege 66 auf. Diese erstrecken sich in kopfabgewandter Richtung von dem hohlzylindrischen Schaft 42 der Hohlschraube 40'. Vorzugsweise sind mindestens zwei Axialstege 66 in Umfangsrichtung des hohlzylindrischen Schafts 42 gleichmäßig zueinander beabstandet angeordnet. Es ist ebenfalls bevorzugt, drei, vier oder fünf Axialstege 66 zu nutzen.

Anhand der Schnittdarstellung der Figuren 11 und 12 ist erkennbar, dass sich die Axialstege 66 in kopfabgewandter Richtung jeweils mit konstanter oder zunehmender Radialstärke erstrecken. Daraus ergibt sich zumindest nach der zweiten Alternative ein bevorzugter konischer Verlauf der Axialstege 66, mit einem dünneren Ende angrenzend an den Hohlzylinder 42 und einem dickeren freien Ende.

Weiter bevorzugt weisen einzelne oder alle Axialstege 66 an einer radialen Innenseite 68 kein Gewinde auf. Wie man anhand von Figur 11 erkennen kann, wird das kopfabgewandte freie Ende 84 der Befestigungsschraube 80 zunächst bis an das axiale Ende des Befestigungsgewindes 56 geschraubt. Aufgrund des zunehmenden Einschraubwiderstand für die Befestigungsschraube 80 im Demontageschutz 60', also beim Einschrauben der Befestigungsschraube 80 zwischen die Axialstege 66, dreht sich die Hohlschraube 40' mit der Befestigungsschrauben 80 mit. Durch das Mitdrehen der Hohlschraube 40' und die Gewindepaarung erster Gangrichtung zwischen Mutternelement 10 und Verstellgewinde 52 der Hohlschraube 40' wird der Kopf 44 in Anlage mit dem zweiten Bauteil B geschraubt. Danach erfolgt das Festziehen der Befestigungsschraube 80 in der Hohlschraube 40'.

Sollte der Abstand T, also die auszugleichende Toleranz zwischen den beiden Bauteilen A, B größer sein als die maximal abstützende Länge L erzielbar mit dem Mutternelement 10 und der Hohlschraube 40' der Toleranzausgleichsanordnung 1, könnte die Befestigungsschraube 80 aus dem Demontageschutz 60' ausgeschraubt werden.

Die Befestigungsschraube 80 drückt die Axialstege 66 so weit radial nach außen, dass sich der daraus ergebende Außendurchmesser des Demontageschutzes 60' mit Befestigungsschraube 80 über den Innendurchmesser des Mutternelements 10 hinaus erstreckt und ein Ausschrauben der Hohlschraube 40 aus dem Mutternelement 10 verhindert.

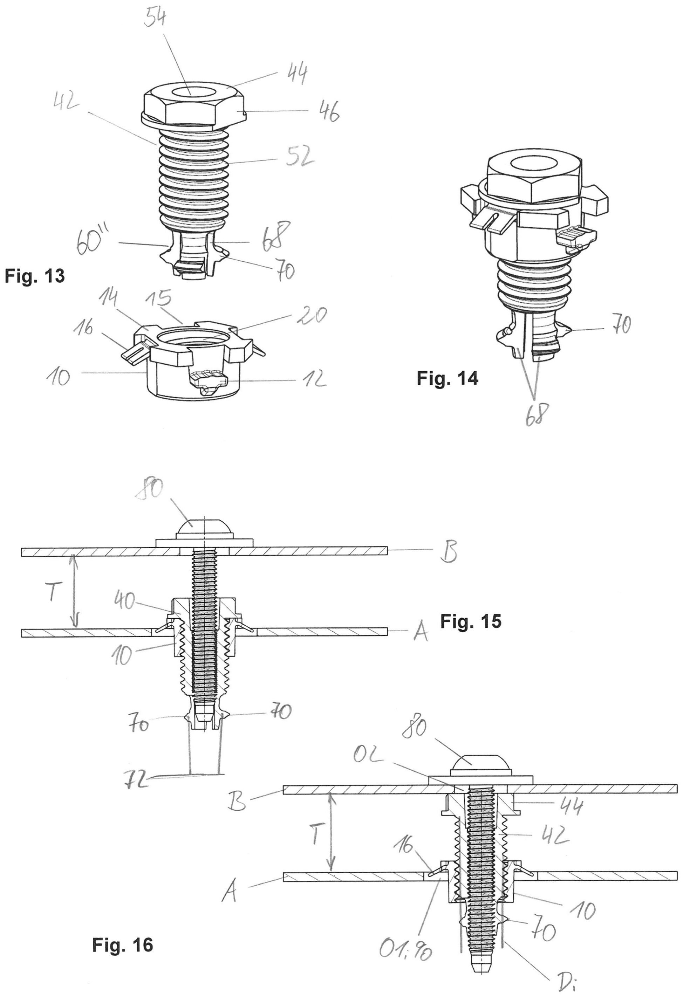

In den Figuren 13-16 ist eine weitere bevorzugte Ausführungsform der axialen Toleranzausgleichsanordnung 1 gezeigt, die sich durch den Demontageschutz 60" von den zuvor beschriebenen bevorzugten Ausführungsformen vorliegender Erfindung unterscheidet. Wie man in den Figuren 13-16 erkennen kann, erstrecken sich von dem hohlzylindrischen Schaft 42 Axialstege 68 in kopfabgewandter Richtung der Hohlschraube 40.

Diese Axialstege 68 weisen vorzugsweise in Richtung des freien Endes eine konstante radiale Dicke oder eine abnehmende radiale Dicke, also eine konische Form, auf. Zudem sind die Axialstege 68 umfänglich gleichmäßig in Bezug auf den hohlzylindrischen Schaft 42 verteilt angeordnet.

Weiter bevorzugt sind die Axialstege 68 streifenartig geformt mit einer konstanten Breite in Umfangsrichtung. Es ist ebenfalls bevorzugt, dass die Breite zum freien Ende hin abnimmt, um damit eine federnde Verformbarkeit der Axialstege 68 zu steigern.

Während eine radiale Innenseite der Axialstege 68 bevorzugt gewindelos gestaltet ist, weist eine radiale Außenseite jeweils einen radial auswärts ragenden Radialsteg 70 auf.

Die Radialstege 70 haben eine bevorzugte radiale Ausdehnung über einen Innendurchmesser des Innengewindes 22 des Mutternelements 10 hinaus. Die Befestigungsschraube 80 wird in das Befestigungsgewinde 56 eingeschraubt und die Hohlschraube 40" beim Einschrauben des Schraubenschaft 84 in den Demontageschutz 60" über das Verstellgewinde 52 und das Mutternelement 10 in Richtung des zweiten Bauteils B versetzt. Die bevorzugte radiale Ausdehnung der Radialstege 70 des Demontageschutzes 60" blockieren ein mögliches Ausschrauben der Hohlschraube 40" aus dem Mutternelement 10.

Vorzugsweise sind die Axialstege 68 radial federnd ausgebildet. Diese Anordnung erleichtert vorzugsweise ein Einsetzen der Hohlschraube 40" in das Mutternelements 10. Denn um den Durchgangskanal 18 des Mutternelements 10 zu passieren, lassen sich die Axialstege 68 mit den darauf angeordneten Radialstegen 70 federnd radial einwärts drücken. Nach dem Passieren des Durchgangskanals 18 federn die Axialstege 68 mit den Radialstegen 70 wieder radial auswärts, um als Demontageschutz 60" ein Passieren des Mutternelements 10 zu verhindern.

Gemäß einer weiteren bevorzugten Ausführungsformen vorliegender Erfindung sind die bevorzugten Radialstege 70 in Bezug zueinander derart angeordnet, dass sie einen axial durchbrochenen und um eine Längsachse der Hohlschraube 40" umlaufenden Gewindesteg 72 bilden. Dies ist anhand von Figur 15 angedeutet, in der die beiden einander gegenüberliegenden Radialstege 70 axial zueinander versetzt angeordnet sind, um den segmentierten Gewindesteg 72 zu bilden.

Der segmentierte Gewindesteg 72 erleichtert bevorzugt das Verbinden des Mutternelements 10 und der Hohlschraube 40". Denn mithilfe des segmentierten Gewindestegs 72 lässt sich die Hohlschraube 40" über den Demontageschutz 60" leichter im Mutternelement 10 installieren als ohne segmentierten Gewindesteg 72. Segmentierter Gewindesteg 72 bedeutet in diesem Fall, dass sich der Gewindesteg aus mehreren Segmenten zusammensetzt, von denen jeweils eines auf einem Axialstege 68 angeordnet ist. Der segmentierte Gewindesteg 72 ist gemäß einer weiteren bevorzugten Ausführungsform komplementär zum Innengewinde des Mutternelements 10 geformt. Basierend auf dieser konstruktiven Grundlage lässt sich der Demontageschutz 60" mit dem segmentierten Gewindesteg 72 durch Eingriff in das Innengewinde 22 des Mutternelements 10 durch dieses hindurch schrauben, um mit weniger Aufwand vorinstalliert zu werden.

Gemäß einer weiteren bevorzugten Ausführungsform vorliegender Erfindung weist die Hohlschraube 40" zur Verstärkung des Befestigungsgewindes 56 einen metallischen Gewindeeinsatz 74 auf.

Da das Mutternelement 10 und die Hohlschraube 40; 40'; 40" aller bevorzugter Ausführungsformen vorliegender Erfindung vorzugsweise mithilfe eines Spritzgussverfahrens aus Kunststoff hergestellt sind, gewährleistet der metallische Gewindeeinsatz 74 eine Verstärkung des Befestigungsgewindes 56 der Hohlschraube 40; 40'; 40" und lässt sich während des Spritzgussverfahrens mit wenig Aufwand in der Hohlschraube 40 anordnen.

Da die Befestigungsschraube 80 ebenfalls bevorzugt aus Metall besteht, lassen sich mithilfe des metallischen Gewindeeinsatzes 74 mechanische Lasten über eine Metall-Metall-Gewindeverbindung abtragen und in das Material der Hohlschraube 40; 40'; 40" einleiten.

Um eine mechanische Belastbarkeit der Kunststoffteile der axialen Toleranzausgleichsanordnung 1; 1'; 1" zu steigern, wird der im Spritzguss verarbeitete Kunststoff bevorzugt mit einem Glasfaseranteil von 25 % bis 65 %, vorzugsweise von 45 % bis 55 % und weiter bevorzugt von 50 % versetzt.

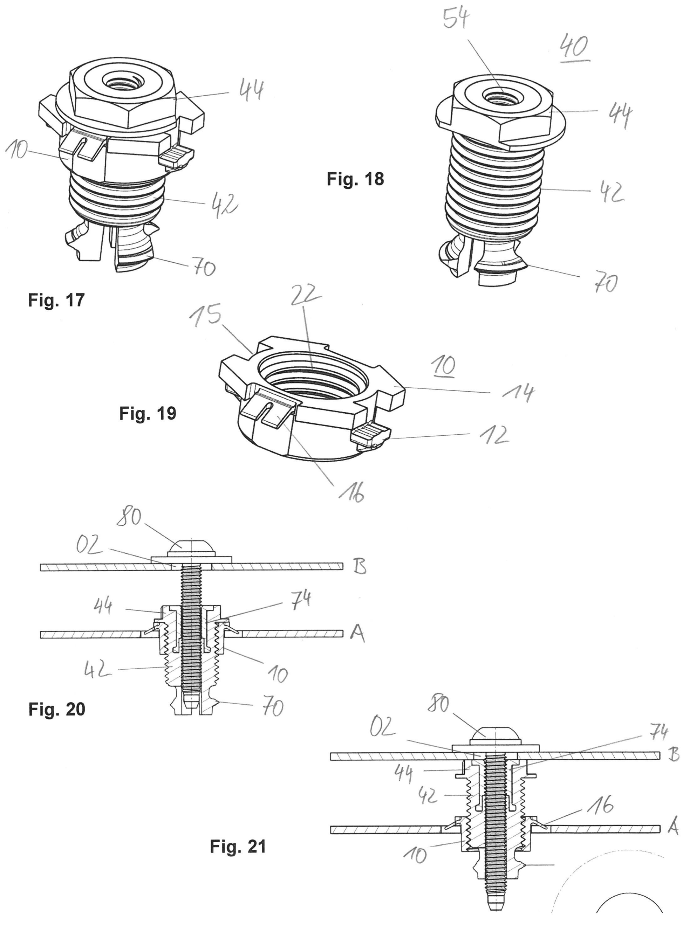

Die vorliegende Erfindung umfasst auch die Verbindung der beiden Bauteile A, B mit Hilfe der erfindungsgemäß bevorzugten axialen Toleranzausgleichsanordnung 1. Beispielgebend sind derartige Verbindungen mit den unterschiedlichen bevorzugten Ausführungsformen der axialen Toleranzausgleichsanordnung 1 in den Figuren 8, 12, 16 und 21 schematisch dargestellt.

Das Verbindungsverfahren zum Verbinden der beiden Bauteile A, B mithilfe der axialen Toleranzausgleichsanordnung 1 lässt sich mit den folgenden Schritten zusammenfassen. Befestigen (Schritt a) des Mutternelements 10 mit einer darin vormontierten Hohlschraube 40 in einer ersten Bauteilöffnung O1, vorzugsweise eine bevorzugte Schlüssellochgeometrie des ersten Bauteils A, Anordnen (Schritt b) der Bauteilöffnung O2 des zweiten Bauteils B gegenüber dem Befestigungsgewinde der Hohlschraube 40 und Einschrauben (Schritt c) der Befestigungsschraube 80, die sich durch die Bauteilöffnung O2 erstreckt, in das Befestigungsgewinde. Danach erfolgt durch Drehen (Schritt d) der Befestigungsschraube 80 und das dadurch stattfindende Mitdrehen der Hohlschraube 40 ein Verlängern der Toleranzausgleichsanordnung 1 in axialer Richtung, bis die Toleranzausgleichsanordnung 1 mit dem Kopf 42 der Hohlschraube 40 an dem zweiten Bauteil B anliegt. Abschließend wird im Schritt e die Befestigungsschrauben 80 im Befestigungsgewinde der Hohlschraube 40 festgezogen, wenn sich der Kopf 42 der Hohlschraube 40 am zweiten Bauteil B abstützt.

Wie oben bereits erwähnt worden ist, bestehen bevorzugt die Bestandteile der axialen Toleranzausgleichsanordnung 1 aus Kunststoff, im Speziellen das Mutternelement 10 und die Hohlschraube 40 in ihren unterschiedlichen bevorzugten Ausgestaltungen. Zudem ist es bevorzugt, den verwendeten Kunststoff für die Herstellung des Mutternelements 10 und der Hohlschraube 40 mit einem Glasfaseranteil (siehe oben) zu versehen, um dessen mechanische Belastbarkeit und Stabilität zu steigern.

Gemäß einer bevorzugten Ausführungsform vorliegender Erfindung werden das Mutternelement 10 und die Hohlschraube 40 mithilfe eines Spritzgussverfahrens hergestellt. Entsprechend lässt sich das Herstellungsverfahren mit den folgenden Schritten zusammenfassen: Bereitstellen (Schritt S1) einer Spritzgussform für das Mutternelement 10 und für die Hohlschraube 40, Spritzgießen (Schritt S2) des Mutternelements 10 und der Hohlschraube 40, Entformen (Schritt S3) des Mutternelements 10 und der Hohlschraube 40 und Vorinstallieren (Schritt S4) der Hohlschraube 40 in dem Mutternelement 10.

Der Schritt des Vorinstallierens (Schritt S4) ist nicht zwingend Bestandteil des Herstellungsverfahrens und kann in Abhängigkeit vom Installationsablauf der axialen Toleranzausgleichsanordnung 1 später erfolgen.

### 6. Bezugszeichenliste

- 1: axiale Toleranzausgleichsanordnung
- 10: Mutternelement
- 12: Bajonettsteg
- 14: Haltekragen
- 15: Durchbruch als Werkzeugeingriff
- 16: Raststeg
- 18: Durchgangskanal im Mutternelement
- 20: radiale Innenseite im Durchgangskanal 18
- 22: Innengewinde einer ersten Gangrichtung
- 40: Hohlschraube
- 42: hohlzylindrischer Schaft
- 44: Kopf
- 46: Antriebsmerkmal
- 48: Anlagefläche
- 50: radiale Außenseite des Schafts 42
- 52: Verstellgewinde erster Gangrichtung
- 54: Kanal
- 56: Befestigungsgewinde zweiter Gangrichtung
- 58: Mitnehmerbereich
- 60: Demontageschutz
- 62: umlaufende Schaftwand
- 64: Axialstege
- 66: Axialstege
- 67: radiale Innenseite der Axialstege 66
- 68: Axialstege
- 70: Radialsteg
- 72: segmentierter Gewindesteg
- 74: metallischer Gewindeeinsatz
- 80: Befestigungsschraube
- 82: Schraubengewinde
- 84: Schraubenschaft
- 90: Schlüssellochgeometrie
- A: erstes Bauteil
- B: zweites Bauteil
- O1: Bauteilöffnung im ersten Bauteil
- O2: Bauteilöffnung im zweiten Bauteil
- R_{E}: Einsetzrichtung
- W: thermisches Werkzeug oder mittels Ultraschall
- DI: Innendurchmesser des Mutternelements
- T: Abstand/Toleranz zwischen den Bauteilen A, B
- L: maximale Länge der Toleranzausgleichsanordnung

## Patentansprüche

1. Eine axiale Toleranzausgleichsanordnung (1) zum selbsttätigen Ausgleich von Toleranzen zwischen einem ersten (A) und einem zweiten Bauteil (B), welche die folgenden Merkmale aufweist:
a. ein Mutternelement (10), vorzugsweise ein ringförmiges Mutternelement, mit einer radial äußeren Befestigungsstruktur (12), insbesondere einer Bajonettstruktur, die in einer Bauteilöffnung (O1), insbesondere einer Schlüssellochgeometrie (90), des ersten Bauteils (A) befestigbar ist, und einem inneren Mutterngewinde (22) einer ersten Gangrichtung,
b. eine Hohlschraube (40) mit einem Kopf (44) und einem hohlzylindrischen Schaft (42), der an einer radialen Außenseite ein Verstellgewinde (52) passend zum Mutterngewinde (22) und an einer radialen Innenseite ein Befestigungsgewinde (56) mit einer der ersten entgegengesetzten zweiten Gangrichtung aufweist, welches mit
c. einer Befestigungsschraube (80) zweiter Gangrichtung zusammenwirkt, sodass das erste (A) und das zweite Bauteil (B) über die Toleranzausgleichsanordnung (1) aneinander befestigbar sind, wobei
d. der hohlzylindrische Schaft (42) an einem dem kopfabgewandten axialen Ende einen Demontageschutz (60) aufweist, mit dem während einer Installation des Toleranzausgleichsanordnung (1) ein Ausschrauben der Hohlschraube (40) aus dem Mutternelement (10) verhindert ist.

2. Die Toleranzausgleichsanordnung (1) gemäß Patentanspruch 1, in der das ringförmige Mutternelement (10) und die Hohlschraube (40) aus Kunststoff bestehen und vorzugsweise einen Glasfaseranteil im Bereich von 25-65%, vorzugsweise 45-55%, bevorzugt 50%, aufweisen.

3. Die Toleranzausgleichsanordnung (1) gemäß einem der vorhergehenden Patentansprüche, in der der Demontageschutz (60) aus einer umlaufenden Schaftwand (60) oder mindestens zwei Axialstegen (64) besteht, die sich in axialer Richtung der Hohlschraube (40) erstrecken und die thermisch radial aufweitbar sind, sodass sich mindestens ein freies Ende der Schaftwand (60) oder der Axialstege (64) über einen Innendurchmesser D_{I} des Mutternelements (10) radial hinaus erstreckt.

4. Die Toleranzausgleichsanordnung (1) gemäß Patentanspruch 1 oder 2, in der der Demontageschutz (60) aus mindestens zwei Axialstegen (66) besteht, die sich in axialer Richtung der Hohlschraube (40) und jeweils mit konstanter oder zunehmender radialer Breite konisch zu einem freien Ende hin erstrecken.

5. Die Toleranzausgleichsanordnung (1) gemäß Patentanspruch 4, deren mindestens zwei Axialstege (66) eine radiale Innen- und eine radiale Außenseite aufweisen, deren Innenseite sich annähernd parallel und deren Außenseite sich radial auswärts geneigt zu einer Längsachse der Hohlschraube (40) erstreckt.

6. Die Toleranzausgleichsanordnung (1) gemäß Patentanspruch 5, deren mindestens zwei Axialstege (66) an einer radialen Innenseite kein Gewinde aufweisen, sodass die Befestigungsschraube (80) eine Drehhemmung durch die Axialstege (66) erfährt und/oder diese stärker radial auswärts versetzt als mit Gewinde.

7. Die Toleranzausgleichsanordnung (1) gemäß Patentanspruch 1 oder 2, in der der Demontageschutz (60) aus mindestens zwei Axialstegen (68) besteht, die sich in axialer Richtung der Hohlschraube (40) erstrecken und jeweils an einer radialen Außenseite radial auswärts einen, vorzugsweise umfänglich verlaufenden, Radialsteg (70) aufweisen.

8. Die Toleranzausgleichsanordnung (1) gemäß Patentanspruch 7, in der mindestens zwei Radialstege (70) derart in Bezug zueinander angeordnet sind, dass sie einen umfänglich verlaufenden Gewindesteg bilden.

9. Die Toleranzausgleichsanordnung (1) gemäß einem der vorhergehenden Patentansprüche, in der das Befestigungsgewinde (56) der Hohlschraube (40) in Form eines umspritzten metallischen Gewindeeinsatzes (74) in den hohlzylindrischen Schaft (42) eingeformt ist.

10. Eine Verbindung eines ersten Bauteils (A) und eines dazu beabstandeten zweiten Bauteils (B) mit der Toleranzausgleichsanordnung (1) gemäß einem der vorhergehenden Patentansprüche und einer Befestigungsschraube.

11. Die Verbindung gemäß Patentanspruch 10, in der das erste Bauteil (A) eine Schlüssellochgeometrie (90) aufweist, in der das Mutternelement (10) angeordnet ist.

12. Ein Verbindungsverfahren eines ersten Bauteils (A) mit einer Schlüssellochgeometrie (90) mit einem dazu beabstandeten zweiten Bauteil (B) mit einer Bauteilöffnung (O2) mit einer Toleranzausgleichsanordnung (1) gemäß einem der Patentansprüche 1-9, das die folgenden Schritte aufweist:
a. Befestigen (a) des Mutternelements (10) mit der darin vormontierten Hohlschraube (40) in der Öffnung (O1), vorzugsweise eine Schlüssellochgeometrie (90), des ersten Bauteils (A),
b. Anordnen (b) der Bauteilöffnung (O2) des zweiten Bauteils (B) gegenüber dem Befestigungsgewinde (56) der Hohlschraube (40) und Einschrauben (c) einer Befestigungsschraube (80), die sich durch die Bauteilöffnung (O2) erstreckt, in das Befestigungsgewinde (56),
c. Drehen (d) der Befestigungsschraube (80) und dadurch Mitdrehen der Hohlschraube (40), bis diese an dem zweiten Bauteil (B) anliegt und
d. Festziehen (e) der Befestigungsschraube (80) im Befestigungsgewinde (56), wenn sich der Kopf (44) der Hohlschraube am zweiten Bauteil (B) abstützt.

13. Ein Herstellungsverfahren der Toleranzausgleichsanordnung (1) gemäß einem der Patentansprüche 1-9, dass die folgenden Schritte aufweist:
a. Bereitstellen (S1) einer Spritzgussform für das Mutternelement (10) und für die Hohlschraube (40),
b. Spritzgießen (S2) des Mutternelements (10) und der Hohlschraube (40),
c. Entformen (S3) des Mutternelements (10) und der Hohlschraube (40), und
d. vorzugsweise Vorinstallieren (S4) der Hohlschraube (40) in dem Mutternelement (10).
